# EUROPÄISCHE PATENTSCHRIFT

(11) **EP 0 824 140 B1**
(45) Veröffentlichungstag und Bekanntmachung des Hinweises auf die Patenterteilung: **10.11.1999**
(21) Anmeldenummer: 97113752.6
(22) Anmeldetag: 08.08.1997
(51) Int. Cl.: C09J 167/02, C08G 63/672

(54) **Copolyetheresterschmelzklebemassen**
Copolyetherester hot melt adhesive compositions
Colles fusibles de copolyétherester

(30) Priorität: 12.08.1996 DE 19632474
(43) Veröffentlichungstag der Anmeldung: 18.02.1998
(73) Patentinhaber: EMS-INVENTA AG, 8002 Zürich (CH)
(72) Erfinder: Kinkelin, Eberhard, Dr.rer.nat, 7000 Chur (CH); Spindler, Jürgen, Dr.rer.nat, 7013 Domat/Ems (CH); Poessnecker, Gerhard, Dr.rer.nat., 7014 Trin (CH)
(74) Vertreter: Becker, Eberhard, Dr.

(56) Entgegenhaltungen:
- DE-A- 3 132 059
- FR-A- 2 148 537

## Beschreibung

Die Erfindung betrifft thermoplastische Copolyetherester für Schmelzklebeanwendungen.

Die Erfindung befaßt sich speziell mit linearen oder verzweigten, schnellkristallisierenden und hochflexiblen Copolyetherestern auf der Basis von Terephthalsäure, 1,4-Butandiol, Triethylenglykol und einem Polyethylenglykol mit einem mittleren Molekulargewicht von 600 - 4000 g/mol.
Diese Polyetherester dienen als Schmelzklebemassen für technische und textile Anwendungen.

Der Einsatz von unterschiedlichen Copolyestern und Copolyetherestern ist bereits vielfach in der Literatur beschrieben.

EP-A-0 204 528 beschreibt Copolyester-Folien für für Nahrungsmittelverpackungen aus einem Copolyester mit mindestens 85 Mol-% Terephthalsäure (TPS), 65 bis 97 Mol-% Butandiol (BDO) und 3 bis 35 Mol-% eines Polyethylenglykols (PEG) mit einer Molmasse von zwischen 106 und 550 g/Mol. Der Schmelzpunkt bei diesen Produkten liegt zwischen 160 und 200°C. Schmelzkleber mit so hohen Schmelzpunkten sind für den Einsatz im Textilbereich unbrauchbar.

DE-A-31 32 059 beschreibt ein Polyetherestersystem zum Verkleben von Textilien, bestehend aus Terephthalsäure (TPS), Isophthalsäure (IPS), Butandiol und 10-25% eines Polyalkylenetherdiols mit einer Molmasse von 400-600 g/mol und mit einem Schmelzpunkt von 95-125°C.

Auch JP 54/153835 beschreibt einen Hotmeltkleber für Fasern aus TPS, IPS, Butandiol und 1-10 % Polyalkylenglykol mit einem Molekulargewicht von 300-6000 g/mol.
In diesen beiden Dokumenten wird zur Absenkung des Schmelzpunktes IPS eingesetzt, das die Kristallisationseigenschaften deutlich verschlechtert.

In DE-A-28 29 375 wird ein thermoplastischer Mischpolyester beschrieben, bestehend aus TPS, einer weiteren Säure, 15-30 Mol-% Ethylenglykol, Diethylenglykol und 0.5-5 Mol-% Polybutylenglykol. Hier werden explizit eine gewisse Menge an Ethylenglykol und speziell Polybutylenglykol gefordert.

DE-A-44 30 048 beschreibt einen Copolyester aus TPS, IPS Butandiol und einem Gemisch aus Diethylenglykol und Triethylenglykol, wobei der Schmelzpunkt zwischen 60° und 130°C liegt.

DE-A-27 25 709 schliesslich beschreibt thermoplastische Blockmischpolymere aus TPS, Butandiol und 1-7 %, bezogen auf PBT, Polyether mit Molekulargewicht von 600-6000 g/mol. In diesem Patent werden spezielle Polymerblöcke im Gegensatz zur statistischen Verteilung eingesetzt.

In der EP-A-0 164 910 werden Copolyester-Folien und Schmelzklebemassen beschrieben, die in diesen Folien enthalten sind. Die Copolyesterschmelzkleber weisen als Komponenten 80 bis 97 Mol-% Terephthalsäure und 3 bis 20 Mol-% Isophthalsäure und als Diolkomponente 60 bis 85 Mol-% 1,4-Butandiol und 15 bis 40 Mol-% Diethylenglykol auf. Der Schmelzpunkt der dortigen Copolyester liegt im Bereich von 160 bis 200°C.

Alle diese obengenannten Patente haben wesentliche substantielle Nachteile und führen nicht zu thermoplastische Copolyetheresterschmelzklebemassen mit hoher Kristallisationsgeschwindigkeit und hoher Flexibilität, die als Schmelzkleber in technischen Anwendungen für schwierige Substrate eingesetzt werden können.

Ziel der vorliegenden Erfindung war die Entwicklung von relativ niedrigschmelzenden, schnellkristallisierenden und hochflexiblen Produkten für Hotmelt-Klebeanwendungen.

Der Vorteil eines niedrigen Schmelzpunktes liegt vor allem in der Möglichkeit, niedere Applikationstemperaturen anwenden zu können. Dies ist vor allem wichtig in dem Bereich der technischen Verklebungen, wenn Substrate, wie z.B. gewisse Kunststoffe, eingesetzt werden, die Schmelztemperaturen unterhalb von 150°C haben.

Der Einsatz eines Copolyesters mit hoher Kristallisationsgeschwindigkeit bietet sich aus verschiedenen Gründen an. Die Bildung von kristallinen Bereichen ist Voraussetzung für die mechanische Festigkeit eines Polymeren oberhalb der Glastemperatur. Je schneller sich also diese kristallinen Domänen ausbilden können, desto eher ist die Verklebungsstelle mechanisch belastbar. Des weiteren ist die Oberflächenklebrigkeit eines polymeren Schmelzklebers direkt von dessen Kristallisation abhängig. Je geringer die Tendenz zur Kristallisation, desto länger bleiben z.B. beschichtete Folien klebrig. Dies bringt beispielsweise beim Aufrollen dieser Folien Schwierigkeiten mit sich, da die einzelnen Lagen leicht miteinander verkleben können und dadurch die ganze Rolle unbrauchbar wird. Dieser Effekt lässt sich zwar durch Auftragen einer sog. Trägerfolie, die den aufgetragenen Kleber von der nächsten Schicht trennt, umgehen. Vor Verpressen mit dem weiteren Substrat muss diese Folie allerdings entfernt werden, was zu Mehraufwand und vor allem zu Abfall führt. Eine andere Möglichkeit sind zeit- und energieaufwendige Temperungsprozeduren, die natürlich ebenso für den ganzen Produktionsprozess von erheblichem Nachteil sind.
Bei Einsatz eines schnellkristallisierenden Polymeren entfallen all diese Schritte.

Der Vorteil von hochflexiblen Produkten liegt in vielerlei Hinsicht auf der Hand. Einerseits können bei Verklebungen im technischen Bereich, abhängig vom Substrat, nur mit flexiblen Klebmassen ausreichende Haftungswerte und Beständigkeiten erreicht werden.

Zum andern können beschichtete und verklebte Teile nachträglich noch Spannungen und Deformationen ausgesetzt werden, bei denen herkömmliche Kleber ihre Haftungseigenschaften verlieren und zu Substratablösungen führen. In diesen Fällen ist ein hochflexibler Klebstoff die einzige Möglichkeit, eine dauerhafte Verbindung von Werkstoffen herzustellen.

Aufgabe der Erfindung ist daher, durch geeignete Kombination von Rohstoffen die drei geforderten Eigenschaften "Relativ niederer Schmelzpunkt", "Hohe Kristallisationsgeschwindigkeit" und "Hohe Flexibilität" in Einklang zu bringen und neue Schmelzklebemassen aus einem statistisch aufgebauten Copolyetherester auf Basis von Terephthalsäure und einem Gemisch von aliphatischen Diolen bereitzustellen.

Diese Aufgabe wird durch die schnell kristallisierenden und hoch flexiblen Copolyetherester-Schmelzklebemassen gemäß Anspruch 1 gelöst. In den Ansprüchen 6 und 7 sind spezielle Anwendungen der erfindungsgemäßen Schmelzklebemassen angegeben.

In den Unteransprüchen sind spezielle Ausführungsformen der Erfindung enthalten.

Die Lösung vorgenannter Aufgabe liegt insbesondere in Schmelzklebemassen aus statistisch zusammengesetztem Copolyetherester mit einer Kombination von Butandiol (BDO), Triethylenglykol (TEG) und Polyethylenglykol (PEG) und wahlweise anderen linearen oder verzweigten aliphatischen Diolen und Terephthalsäure (TPS) als einziger Säurekomponente. Die Viskosität sollte bei diesen hochflexiblen Produkten vorzugsweise über 200 Pa*s bei 160°C liegen.

Bei alleiniger Verwendung von Terephthalsäure als Säurekomponente liegen im allgemeinen die Schmelzpunkte weit über dem gewünschten Bereich. Eine Herabsetzung des Schmelzpunktes ist durch einen Teilersatz der Terephthalsäure durch eine andere Säure, wie z.B. Isophthalsäure (IPS) möglich. Eine solche Kombination verschlechtert aber die Kristallinität bzw. die Kristallisationsgeschwindigkeit in erheblichem Masse.
Überraschenderweise lässt sich in der vorliegenden Erfindung durch den Einsatz von Triethylenglykol als Codiolkomponente der Schmelzpunkt um über 80° absenken unter gleichzeitiger Beibehaltung der hohen Kristallisationsgeschwindigkeit.

Obwohl schon durch den Einsatz von niedermolekularen Etherdiolen eine gewisse Flexibilität des Polymeren erreicht wird, ist das Ziel, ein hochflexibles Polymeres herzustellen, nur durch den gleichzeitigen Einsatz eines höhermolekularen Etherdiols, wie z.B. Polyethylenglykol 600 zu erreichen.

Obwohl auf dem Gebiet der Klebstoffe eine Vielzahl von Patenten existiert, ist die Monomerkombination des vorliegenden Patentes noch nie beschrieben und in seiner Kombination und den erzielten Eigenschaften einzigartig.

So wird zwar in der EP-A-204 528 ein Copolyesterfilm beschrieben, der aus 85-100 % TPS, 65-97 % Butandiol und 3-35 Mol-% Polyethylenglykol mit einem Molekulargewicht von 106-550 g/mol besteht und einen Schmelzpunkt von 160°-200°C aufweist. Im Vergleich zur vorliegenden Erfindung fehlt hier die unbedingt nötige Triethylenglykolkomponente, zum andern schliesst der Molekulargewichtsbereich des Polyethylenglykols das erfindungsgemässe Polyethylenglykol nicht ein und der Schmelzbereich liegt aufgrund der Anwendung für Klebefilme zu hoch.

Für die erfindungsgemässen Copolyetheresterschmelzklebemassen wird als Säurekomponente allein Terephthalsäure eingesetzt.
Der molare Anteil an Butandiol liegt zwischen 45 und 70 Mol-%, bezogen auf die Gesamtdiolmenge, während der Anteil an Triethylenglykol zwischen 20 und 50 Mol-% beträgt. Als höhermolekulare Polyethylenglykolkomponente wird ein Polyethylenglykol mit einer Molmasse von 600-4000 g/mol in der Menge von 2-10 Mol-% eingesetzt. Der Anteil an Butandiol kann sich um bis zu 3 Mol-% reduzieren, wenn zur Erhöhung des Molekulargewichts des Polymeren eine mehrwertige Alkoholkomponente eingesetzt wird wie z.B. Trimethylolpropan oder gegebenenfalls auch ein β-Hydroxyalkylamid.

Die Schmelzpunkte der erfindungsgemässen Copolyetheresterschmelzklebemassen liegen zwischen 90 und 180°C, vorzugsweise zwischen 110 und 170°C. Die Schmelzviskosität, gemessen bei 160°C und 2.16kg Belastung nach DIN/ISO 1133 liegt nicht unter 200 Pa*s, vorzugsweise nicht unter 500 Pa*s.

Die erfindungsgemässen Vorteile beruhen auf der besonderen und nirgends beschriebenen Wirkung der Kombination von TPS, Butandiol, Triethylenglykol und höhermolekularem Polyethylenglykol, die einerseits den Schmelzpunkt in den gewünschten Bereich verschiebt, andererseits auch für die hohe Kristallisationsgeschwindigkeit und besonders für die extrem hohe Flexibilität verantwortlich ist.

Die erfindungsgemässen Copolyetheresterschmelzklebemassen kommen aufgrund ihrer Flexibilität hauptsächlich im Hotmeltverfahren zur Anwendung, können aber auch in den bekannten pulverförmigen Beschichtungsverfahren eingesetzt werden.

In folgenden Beispielen sollen die erfindungsgemässen Copolyetherester mit anderen Produkten verglichen werden, wobei die Beispiele 9-11 als Vergleichsbeispiele dienen, die nicht von der vorliegenden Erfindung abgedeckt werden.

Die Schmelzpunkte, Glastemperaturen und Kaltkristallisationspunkte wurden mit einem DSC-Gerät der Fa. duPont Typ 1090B durchgeführt. Als Schmelzpunkt wird das Maximum des Schmelzpeaks angenommen, als Glastemperatur die Mitte der beiden Basislinien. Als Kaltkristallisationspunkt gilt das Maximum des Kristallisationspeaks beim 2. Aufheizen der Probe im DSC.

Die Schmelzviskosität wurde nach dem Auslaufverfahren bei 160°C und einer Belastung von 2,16 kg nach DIN/ISO 1133 bestimmt.

### Beispiel 1

In einem 10-I-Veresterungsreaktor, versehen mit Temperaturfühler, Rührer, Rückflusskolonne und Destillationsbrücke werden 1,15 kg (1,27 Mol) Butandiol, 1,45 kg (0,97 Mol) Triethylenglykol und 0,82 kg (0,14 Mol) Polyethylenglykol mit einem mittleren Molekulargewicht von 600 vorgelegt und bei 140°C unter einer während der ganzen Reaktion aufrechtgehaltenen Stickstoffatmosphäre aufgeschmolzen. Unter Rühren werden dann 2,82 kg (1,27 Mol) Terephthalsäure und 3 g Veresterungskatalysator zugegeben. Nach schrittweiser Erhöhung der Innentemperatur auf 235°C wird die Reaktion solange fortgesetzt, bis kein Destillat mehr entsteht. Anschliessend werden erneut 6 g Veresterungskatalysator und 3 g Hitzestabilisator zugegeben. Die Temperatur wird auf 250°C erhöht und schrittweise Vakuum angelegt, bis ein Endvakuum von < 1 mbar erreicht ist. Die Kondensation wird mindestens 2 Stunden fortgesetzt, bis die gewünschte Viskosität erreicht ist.
Der erhaltene Polyester hat nach 24-stündiger Trocknung bei 60°C einen Schmelzpunkt von ca. 128 ° C, einen TG von ca. -5°C und eine Schmelzviskosität, gemessen bei 160°C und 2,16 kg Belastung, von 1100 Pa*s.

### Beispiel 2-11

Die Polyester wurden analog dem Beispiel 1 hergestellt und sind in den Tabelle 1 und 2 zusammengefasst.
Die DSC-Messungen wurden an vorgetrocknetem Material (24h/70°C) durchgeführt.

**Tabelle 1**

| | 1 | 2 | 3 | 4 | 5 | 6 |
|---|---|---|---|---|---|---|
| Terephthalsäure (Mol-%) | 100 | 100 | 100 | 100 | 100 | 100 |
| Butandiol (Mol-%) | 52 | 66 | 59 | 49 | 58 | 56 |
| Triethylenglykol (Mol-%) | 40 | 26 | 33 | 43 | 40 | 40 |
| Polyethylenglykol 600 (Mol-%) | 8 | 8 | 8 | 8 | 2 | 4 |
| Schmelzpunkt (DSC, °C) | 128 | 160 | 145 | 112 | 138 | 133 |
| Glastemperatur (DSC, °C) | -5 | -3 | -5 | -6 | 7 | 4 |
| Kaltkristallisationspkt. (DSC, °C) | 44 | 22 | 26 | 45 | 47 | 50 |
| Schmelzviskosität 160° (Pa*s) | 1100 | 150* | 2000 | 1050 | 1200 | 1150 |

| | | | | | | |
|---|---|---|---|---|---|---|
| * gemessen bei 190°C/2,16 kg | | | | | | |

**Tabelle 2**

| | 7 | 8 | 9 | 10 | 11 |
|---|---|---|---|---|---|
| Terephthalsäure (Mol-%) | 100 | 100 | 100 | 100 | 100 |
| Butandiol (Mol-%) | 54 | 50 | 92 | 59 | 54 |
| Triethylenglykol (Mol-%) | 40 | 40 | | 41 | 46 |
| Polyethylenglykol 600 (Mol-%) | 6 | 10 | 8 | | |
| Schmelzpunkt (DSC, °C) | 133 | 120 | 209 | 136 | 121 |
| Glastemperatur (DSC, °C) | -2 | -8 | | 17 | 12 |
| Kaltkristallisationspkt. (DSC, °C) | 30 | 43 | 50 | 69 | 64 |
| Schmelzviskosität 160° (Pa*s) | 1100 | 900 | 100* | 1170 | 1120 |

| | | | | | |
|---|---|---|---|---|---|
| * gemessen bei 230°C/2,16 kg | | | | | |

### Beispiel 12-14

Von dem Copolyetherester aus den Beispielen 1, 3, 10 und 11 wurden Beschichtungsversuche zur Bestimmung der Originalhaftung und der Wärmestandfestigkeit durchgeführt.
Zur Prüfung der Haftfestigkeit auf Textilien wurden Pulver mit einer Korngrösse von 80 bis 200 µm auf einen handelsüblichen Einlagestoff mittels Streubeschichtung und einem Auflagegewicht von 40 g/m² aufgetragen und dieser anschliessend mit einem Pressdruck von 0,4 bar mit einem handelsüblichen Oberstoff verpresst.
Zur Messung der Haftkraft auf Textilien wurden 5 cm breite verklebte Textilstreifen in eine Zugmaschine eingespannt. Die Prüfparameter waren bei allen Messungen konstant:

| | |
|---|---|
| Prüfgeschwindigkeit | 100 mm/min |
| Prüfkörperbreite | 50 mm |
| Prüfstrecke | 80 mm |
| Vorkraft | 0 N |
| Prüftemperatur | 25 °C |
| Verpresstemperatur | 170 °C |

Zur Messung der Wärmestandfestigkeit wurden an die verklebten Textilstreifen ein gewicht von 250g/5cm angehängt. Die Proben wurden mit den angehängten Gewichten in einem Umluftofen aufgehängt, der mit 1°C/min aufgeheizt wurde. Die Temperatur, bei der sich die Verklebung löst, wird als Wärmestandfestigkeit bezeichnet.

**Tabelle 3**

| Probe | 1 | 3 | 10 | 11 |
|---|---|---|---|---|
| Originalhaftung (N/5cm) | 22 | 23 | 15 | 15 |
| Wärmestandfestigkeit (°C) | 110 | 123 | 110 | 105 |

### Beispiel 15

Vom Copolyetherester aus Beispiel 1 wurden durch gängige Spritzgussverfahren ISO-Zugstäbe und ISO-Balken für Zug- und Schlagversuche hergestellt. Die Messungen wurden an vorgetrocknetem Material nach ISO 527 (Zugversuch), ISO 179 (Schlagzähigkeit) und DIN 53505 (Shore-Härte) durchgeführt.

| | |
|---|---|
| Zug-E-Modul [MPa] | 110 |
| Streckspannung [MPa] | 10 |
| Streckdehnung [%] | 20 |
| Reissfestigkeit [MPa] | 15 |
| Reissdehnung [%] | > 775 |
| Schlagzähigkeit Charpy New / 23°C [kJ/m ² ] | 30 |
| Schlagzähigkeit Charpy New / -30°C [kJ/m ² ] | 70 |
| Shore-Härte D | 40 |

Hier zeigt allein die nicht mehr messbare Reissdehnung die überragend hohe Flexibilität dieses Materials.

## Patentansprüche

1. Schmelzklebemassen aus einem statistisch aufgebauten Copolyetherester auf Basis von Terephthalsäure und einem Gemisch von aliphatischen Diolen, dadurch gekennzeichnet, daß Terephthalsäure als einzige Säure-Komponente eingesetzt wird und ihr molarer Anteil, bezogen auf die Gesamtsäuremenge, bei 100 Mol% liegt, daß als Diol-Komponente eine Kombination von Butandiol, Triethylenglykol, und Polyethylenglykol vorliegt, wobei der molare Anteil an Butandiol weniger als 80 Mol-% beträgt, der Anteil an Triethylenglykol zwischen 15 und 60 Mol-% liegt und mindestens 2 und höchstens jedoch 10 Mol-% einer höhermolekulare Polyethylenglykolkomponente mit einer Molmasse von 600-4000 g/mol eingesetzt wird, bezogen auf die Gesamtsäure- und Gesamtdiolmenge von jeweils 100 Mol-%, und der Schmelzpunkt der Copolyetherester-Klebemassen zwischen 90° und 180°C liegt.

2. Copolyetheresterschmelzklebemassen gemäß Anspruch 1, dadurch gekennzeichnet, daß der molare Anteil an Butandiol vorzugsweise zwischen 45 und 70 Mol-% und der Anteil an Triethylenglykol zwischen 20 und 50 Mol-% liegt.

3. Copolyetheresterschmelzklebemassen gemäß einem der Ansprüche 1 und 2, dadurch gekennzeichnet, daß zur Erhöhung der Schmelzviskosität ein drei- oder mehrwertiges Diol bis höchsten 3 Mol-%, bezogen auf die Gesamtdiolmenge eingesetzt werden kann.

4. Copolyetheresterschmelzklebemassen gemäß einem oder mehreren der Ansprüche 1 bis 3, dadurch gekennzeichnet, dass ihr Schmelzpunkt zwischen 110° und 170°C liegt.

5. Copolyetheresterschmelzklebemassen gemäß einem oder mehreren der Ansprüche 1 bis 4, dadurch gekennzeichnet, daß ihre Schmelzviskosität, gemessen nach ISO/DIN 1133 (160°C/2,16 kg), nicht unter 200 Pas, vorzugsweise nicht unter 500 Pas, liegt.

6. Verwendung der Copolyetheresterschmelzklebemassen gemäß einem oder mehreren der Ansprüche 1 bis 5 für das Hotmelt-Verfahren, oder zur Herstellung von pulverförmigen Schmelzklebern in unterschiedlichen Fraktionen für den Pulverpunkt-, Pastenpunkt- und für die Streubeschichtung.

7. Verwendung der Copolyetheresterschmelzklebemassen gemäß einem oder mehreren der vorhergehenden Ansprüche 1 bis 5 mit reduzierter Weichmachermenge zur Herstellung von Klebern in Pastenform.

## Claims

1. Hot melt adhesive compositions formed from a statistically built-up copolyether ester based on terephthalic acid and a mixture of aliphatic diols, characterised in that terephthalic acid is used as the single acid component, and its molar proportion, relative to the total quantity of acid, is 100 mol.%, in that a combination of butane diol, triethylene glycol and polyethylene glycol is present as the diol component, the molar proportion of butane diol amounting to less than 80 mol.%, the proportion of triethylene glycol lying between 15 and 60 mol.%, and at least 2 mol.% and at most, however, 10 mol.% of a higher molecular polyethylene glycol component being used with a molar composition of 600-4000 g/mol, relative to the total quantity of acid and total quantity of diol of 100 mol.% each, and the melting point of the copolyether ester adhesive compositions lying between 90° and 180°C.

2. Copolyether ester hot melt adhesive compositions according to claim 1, characterised in that the molar proportion of butane diol lies preferably between 45 and 70 mol.%, and the proportion of triethylene glycol lies between 20 and 50 mol.%.

3. Copolyether ester hot melt adhesive compositions according to one of claims 1 and 2, characterised in that, to increase the melting viscosity, a trivalent or polyvalent diol can be used up to a maximum 3 mol.%, relative to the total quantity of diol.

4. Copolyether ester hot melt adhesive compositions according to one or more of claims 1 to 3, characterised in that their melting point lies between 110° and 170° C.

5. Copolyether ester hot melt adhesive compositions according to one or more of claims 1 to 4, characterised in that their melting viscosity, measured in accordance with ISO/DIN 1133 (160° C/2.16 kg), does not lie below 200 Pas, preferably not below 500 Pas.

6. Use of the copolyether ester hot melt adhesive compositions according to one or more of claims 1 to 5 for the hot melt method, or to produce pulverulent hot melt adhesives in various fractions for dot-coating with powder, dot-coating with paste and for scatter-coating.

7. Use of the copolyether ester hot melt adhesive compositions according to one or more of the preceding claims 1 to 5 with a reduced quantity of plasticisers to produce adhesives in paste form.

## Revendications

1. Masses de colles fusibles composées d'un ester de copolyéther de structure statique à base d'acide téréphtalique et d'un mélange de diols aliphatiques, caractérisées en ce que de l'acide téréphtalique est utilisé en tant qu'unique composé acide et que sa proportion molaire rapportée à la quantité totale d'acide est de 100 % en moles, en ce que le composé diol est une combinaison de butanediol, de triéthylèneglycol et de polyéthylèneglycol, la proportion molaire en butanediol étant inférieure à 80 % en moles, la proportion en triéthylèneglycol étant comprise entre 15 et 60 % en moles, et en ce qu'il est utilisé au moins 2, et cependant au plus 10 % en moles, d'un composé de polyéthylèneglycol de poids moléculaire plus élevé d'une masse molaire de 600 à 4.000 g/mole rapportés aux quantités totales respectives d'acide et de diols de 100 % en moles, et en ce que le point de fusion des masses de colles d'ester de copolyéther se situe entre 90° et 180 °C.

2. Masses de colles fusibles d'ester de copolyéther selon la revendication 1, caractérisées en ce que la proportion molaire en butanediol est de préférence comprise entre 45 à 70 % en moles, et en ce que la proportion en triéthylèneglycol est comprise entre 20 et 50 % en moles.

3. Masses de colles fusibles d'ester de copolyéther selon l'une des revendications 1 et 2, caractérisées en ce que, pour l'augmentation de la viscosité de fusion, un diol trivalent ou polyvalent peut être utilisé à hauteur de 3 % en moles maximum rapportés à la quantité totale de diols.

4. Masses de colles fusibles d'ester de copolyéther selon l'une ou plusieurs des revendications 1 à 3, caractérisées en ce que leur point de fusion se situe entre 110 ° et 170 °C.

5. Masses de colles fusibles d'ester de copolyéther selon l'une ou plusieurs des revendications 1 à 4, caractérisées en ce que leur viscosité de fusion mesurée d'après ISO/DIN 1133 (160 °C / 2,16 kg) n'est pas inférieure à 200 Pas, de préférence pas inférieure à 500 Pas.

6. Utilisation des masses de colles fusibles d'ester de copolyéther selon l'une ou plusieurs des revendications 1 à 5 pour le procédé hotmelt, ou pour la fabrication de colles fusibles pulvérulentes de différentes fractions pour le revêtement du point pulvérulent, du point pâteux, et pour le revêtement par dispersion.

7. Utilisation des masses de colles fusibles d'ester de copolyéther selon l'une ou plusieurs des revendications précédentes 1 à 5 avec une quantité réduite d'émollient pour la fabrication de colles sous forme de pâte.
